# EUROPÄISCHE PATENTSCHRIFT

(11) **EP 3 022 274 B1**
(45) Veröffentlichungstag und Bekanntmachung des Hinweises auf die Patenterteilung: **12.06.2019**
(21) Anmeldenummer: 14741269.6
(22) Anmeldetag: 16.07.2014
(51) Int. Cl.: C09K 21/14, C08G 69/42

(54) **VERFAHREN ZUR HERSTELLUNG VON FLAMMGESCHÜTZTEN COPOLYAMIDEN, DIE DANACH ERHÄLTLICHEN POLYAMIDGARNE SOWIE DEREN VERWENDUNG**
METHOD FOR PRODUCING FLAME-RETARDANT COPOLYAMIDES, THE POLYAMIDE YARNS THAT CAN BE OBTAINED ACCORDING TO THE METHOD, AND USE OF SAID POLYAMIDE YARNS
PROCÉDÉ DE PRODUCTION DE COPOLYAMIDES IGNIFUGÉS, LES FILS POLYAMIDES AINSI OBTENSIBLES AINSI QUE LEUR UTILISATION

(30) Priorität: 16.07.2013 DE 102013011842
(43) Veröffentlichungstag der Anmeldung: 25.05.2016
(73) Patentinhaber: Deutsche Institute für Textil- und Faserforschung Denkendorf, 73770 Denkendorf (DE)
(72) Erfinder: GUTMANN, Rainer, 73760 Ostfildern (DE); ABEL, Thomas, 73207 Plochingen (DE)
(74) Vertreter: Held, Stephan
(86) Internationale Anmeldenummer: PCT/EP2014/065263
(87) Internationale Veröffentlichungsnummer: WO 2015/007783

(56) Entgegenhaltungen:
- DE-A1- 19 711 523
- DE-A1-102009 005 967
- US-A- 5 750 603
- US-A1- 2010 004 426

## Beschreibung

Die Erfindung betrifft ein flammfestes Polyamid als Kondensationsprodukt von Dicarbonsäuren mit Diaminen und gegebenenfalls einen Gehalt an Additiven, insbesondere an einem Flammschutzmittel, ein Verfahren zur Herstellung dieses flammfesten Polyamids und dessen vorteilhafte Verwendung zur Herstellung von Formkörpern, insbesondere Filamentgarnen.

Polymere auf Basis von handelsüblichen Polyamiden ohne entsprechende Modifizierungszusätze, die zur Erreichung einer Nicht-Entflammbarkeit benötigt werden, werden in die Brandschutzklasse "B" (DIN 4102 - BS 5852 - M1 - UL94) eingeordnet. Erst mittels einer zusätzlichen Behandlung kann die Klasse "B1" (Schwerentflammbare Materialien) erreicht werden. Diese Behandlung kann sowohl durch die Einarbeitung einer geeigneten Flammschutzkomponente in die Polyamidkette oder die Polymermatrix erfolgen ebenso wie durch die Ausrüstung von Polyamidgarnen oder Polyamidtextilien mit geeigneten Flammschutzmitteln. Die dabei zu erreichende Qualität der Schwerentflammbarkeit hängt von den Zusätzen bzw. vom Verfahren ab, welche zur Erreichung der Schwerentflammbarkeit genutzt werden, und wird den Anwendungen und den gesetzlichen Auflagen entsprechend individuell bedient. Eine der gängigsten Vorschriften zur Beurteilung der Brennbarkeit wird von den Underwriters Laboratories in der Vorschrift UL94 beschrieben, welche mit gleichem Inhalt in die Normen IEC/DIN EN 60695-11-10 und -20 und die kanadische CSA C 22.2 eingeflossen ist. Darin wird die Qualität der Schwerentflammbarkeit mit einer Bunsenbrennerflamme getestet und in verschiedenen Stufen wie folgt klassifiziert:
- HB:: langsames Brennen einer horizontal eingespannten Probe (mit Selbstverlöschen),
- V-2:: Verlöschen einer vertikal eingespannten Probe innerhalb von 30 Sekunden,
- V-1:: Verlöschen einer vertikal eingespannten Probe innerhalb von 30 Sekunden ohne brennendes Abtropfen von Kunststoffschmelze und
- V-0:: Verlöschen einer vertikal eingespannten Probe innerhalb von 10 Sekunden.

Die heute üblicherweise genutzten Verfahren, um ein Material flammfest zu machen, können in physikalische und chemische Methoden unterteilt werden. Bei der physikalischen Polymermodifizierung werden meist 2-Phasensysteme erzeugt, indem entweder flammhemmende Additivzusätze - seien sie mineralischer oder organischer Natur - in das Polymer eingearbeitet werden, oder indem eine Beschichtung oder Ausrüstung des polymeren Materials an dessen Oberfläche erfolgt, wobei flammhemmende Zusätze aufgebracht werden, die physikalisch verankert aber auch reaktiv angebunden werden können, was bereits eine chemische Modifizierung darstellt. Bei der eigentlichen chemischen Polymermodifizierung kann unterschieden werden zwischen der Modifizierung in der Polymerkette, durch Zusatz eines im Sinne des Flammschutzes wirksamen Comonomers im Polymerisationsschritt, der Modifizierung über polymeranaloge Reaktionen an der Hauptkette, dies in Form von Pfropfung bzw. Verzweigung durch die FR-Komponente an der Polymerhauptkette, sowie der Modifizierung durch nachträgliche Vernetzung der Polymerketten untereinander, z.B. durch Bildung eines radikalisch initiierten Polymernetzwerkes, wobei ein 'unschmelzbares' Polymer erzeugt werden kann.

Die Aufgabe aller beschriebenen Modifizierungen ist es, den Brandprozess zu unterbinden, indem der Mechanismus des Brennvorgangs an einer Stelle unterbrochen wird. Dazu greifen die Zusätze in z.T. unterschiedlicher Weise in den bekannten Brandzyklus ein, der mit einer thermischen Zersetzung des Polymers in niedermolekulare, gasförmige Komponenten beginnt. Die Pyrolysegase diffundieren aus dem polymeren Werkstoff und kommen in Kontakt mit dem Luftsauerstoff, wobei sie unter Freisetzung von Energie oxidiert werden - Beginn der Flammbildung. Die freigesetzte Energie in Form von Wärme heizt das Material weiter auf und beschleunigt so den Brandprozess zusätzlich. An welcher Stelle nun die zugesetzte Flammschutzkomponente wirksam wird, wird von deren Chemie bestimmt. Diese Mechanismen werden u.a. in zwei umfassenden Monographien beschrieben (M. Le Bras, G. Camino, S. Bourbigot, R. Delobel(Eds.): Fire Retardancy of Polymers, The Use of Intumescence, Roy. Soc. Chem. Pub., Cambridge, 1998 sowie J. Troitzsch: Plastics Flammability Handbook, Carl Hanser Verlag, München, 2004), die den Stand der Forschung repräsentieren. Hinsichtlich der Verwendung heute üblicher Flammschutzmittel liegt eine ähnlich umfassende Studie des Umwelt Bundesamtes mit der Berichtsnummer UBA-FB 000171/2 vor. Der dreiteilige Berichts mit dem Titel "Erarbeitung von Bewertungsgrundlagen zur Substitution umweltrelevanter Flammschutzmittel", bestehend aus Band I: Ergebnisse und zusammenfassende Übersicht, Band II: Flammhemmende Ausrüstung ausgewählter Produkte - anwendungsbezogene Betrachtung: Stand der Technik, Trend, Alternativen (von besonderer Bedeutung ist hierin Kapitel VI: Textilanwendungen) und Band III: Toxikologisch-ökotoxikologische Stoffprofile ausgewählter Flammschutzmittel wurde von den Autoren A. Leisewitz, H. Kruse, E. Schramm, W. Schwarz, O. Paulsen, C. Schau, M. Wieben, U. Böhde im März 2001 veröffentlich.

Der Brandschutz ist seit alters her bis zum heutigen Tage eine auch volkswirtschaftlich bedeutende Aufgabe, deren aktuelle Fragestellungen sich gegenüber früher neben den grundsätzlichen Wirkungsweisen bei der Brandbekämpfung und zur Verhinderung des Brennens mit den resultierenden toxischen und ökotoxischen Aspekten der Chemie des Brandprozesses befassen. Wie die Alltagserfahrung lehrt, führt der Abschluss des Brandherds von der Luft- bzw. Sauerstoffzufuhr zu einem Verlöschen des Brandes. Dieses Prinzip wird beim Ersticken eines Brandes mechanisch praktiziert, andererseits hat man sich diese Grundidee viele Jahre lang beim Einsatz von halogenhaltigen Systemen als Brandschutzmittel zunutze gemacht. Dabei werden im Brandfall durch Emission aus diesen Systemen chemische Komponenten freigesetzt, die über schnelle radikalische Reaktionen in der Lage sind, den Sauerstoff in unmittelbarer Nähe des Brandes chemisch zu binden und auf diese Weise die Konzentration an freiem Sauerstoff zu reduzieren. Dieser steht dann nicht mehr in ausreichendem Maße für das Brennen des Polymers zur Verfügung und die Flamme erlischt. Die hierfür in Frage kommenden halogenhaltigen Verbindungen sind mehrfach substituierte ungesättigte, cyclische Aliphaten und Heteroaliphaten sowie kondensierte oder über Heteroatome verbrückte, aromatische Systeme (US3810861A, DE2604275A1, EP79177A1). Häufig werden diese Verbindungen auch in Kombination mit Metalloxiden/-hydoxiden, Carbonaten, Acetaten, Phosphaten, Boraten etc. eingesetzt, da von diesen eine synergistische Wirkung auf den flammhemmenden Effekts ausgeht (DE2114235A, AT355307B, US3810861A). Beispiele dazu finden sich in verschiedenen, meist älteren Patenten, da in jüngster Zeit diese Systeme erheblich unter Druck geraten sind, weil sie im Einsatzfall toxische und ökotoxische Produkte generieren.

Als Alternative hierzu wurde in den letzten Jahren mehr und mehr die Verwendung von Zusätzen untersucht, die in der Lage sind, das Polymer durch die Ausbildung einer Schutzschicht vor dem Brennen zu bewahren. Erreicht wird dieser Effekt durch den Zusatz von mehrkomponentigen Systemen zu den verschiedenen Polymeren, wobei diese Zusätze die Verkohlung fördern, wie z.B. Polyalkohole, Treibgase entwickeln, wie z.B. Melaminverbindungen, oder Wasser freisetzen können, wie z.B. phosphorhaltige Säuren, die dabei in Polyphosphorsäuren übergehen und so eine hochschmelzende oder poröse Schutzschicht an der Polymeroberfläche erzeugen. Dadurch wird dem Brand Wärme entzogen, die Wärmediffusion erschwert und die Emission von Pyrolysegasen bzw. die Diffusion von Sauerstoff reduziert (DE4015490A1, EP245207A2, EP496241A1). Ein Nachteil dieser Systeme ist ihre notwendigerweise hohe Dosierung, die speziell bei der Extrusion zu Fasern zu erheblichen Verarbeitungsproblemen führen sowie die Gebrauchseigenschaften so deutlich verschlechtern kann, dass eine Anwendung im Faserbereich nicht mehr möglich ist, während dies bei anderen Extrusionsprozessen kein Ausschlusskriterium darstellt (S.V. Levchik, E.D. Weil; A Review of Recent Progress in Phosphorous-based Flame Retardants, J. Fire Sci. 2006, 24, 345). Die Frage der Dosierung und der dadurch veränderten Verarbeitungs- und Gebrauchseigenschaften unterscheidet somit den Einsatz von Flammschutzmitteln in Textilien ganz wesentlich von den übrigen, mengenmäßig meist größeren Einsatzgebieten (Elektro- und Elektroniksektor, Baubereich, IT- und TV-Anwendungen) und erfordert gesonderte Lösungen, die speziell im Fall der Polyamide bisher nicht vorhanden sind. Zwei Ausnahmen stellen hier lediglich die in jüngster Zeit beschriebene Ausrüstung von Polyamid-6.6-Textilien durch Oberflächenmodifizierung und Vernetzung mit Thioharnstoff dar (J. Sun, X. Gu, Q. Dong, S. Zhang et al.; Polym. Adv. Technol. 2013, 24(1), 10) sowie das mittlerweile kommerzielle System (Melliand Textilberichte 4/2012, S. 210) einer halogenfreien Beschichtung für Polyamidfasern (US20090176424A1, WO2010/086621A2), welche aus einem Silikon-haltigen System und Zusatzkomponenten über die Ausbildung einer schützenden Nanokomposit-Kohlenstoffschicht (A.B. Morgan; Flame Retardant Polymer layered Silicate Nanocomposites: A Review of Commercial and open Literature Systems, Polym. Adv. Technol. 2006, 17(4), 206) einen effektiven Flammschutz bewirkt.

Demgegenüber können Systeme, die nur auf Phosphin- oder Phosphonsäurederivaten basieren, insbesondere wenn sie in die Polymerkette eingebaut sind, erheblich niedriger dosiert werden, wobei sie dennoch eine ausreichende Flammschutzwirkung entfalten. Jedoch gibt es auf dieser Grundlage, ebenso wie für alle anderen gängigen Flammschutzsysteme, keine für eine Anwendung als Additiv bei der Polyamidfaserherstellung geeigneten Systeme, da die Temperaturbeständigkeit der Phosphorverbindungen in der Regel nicht ausreichend ist. Für den Einsatz in anderen Polyamidanwendungen, wie z.B. in elektrischen Leiterplatten, existieren hingegen Lösungen unter alleiniger Verwendung von Phosphorverbindungen, die dem Polymer bei der Verarbeitung beigemischt werden können.

Im Gegensatz dazu werden Phosphin- oder Phosphonsäurederivaten seit vielen Jahren in Polyesterfaseranwendungen eingesetzt. Dabei werden diese Anwendungen im Wesentlichen von einem Produkt (Trevira CS) dominiert, bei dem die Phosphorkomponente (Exolit®PE110) in der Polymerhauptkette einkondensiert ist (EP0551850A1, EP1837338A1, EP1837340A1). Verfahren, um diese oder strukturell ähnliche Verbindungen auch in Polyamiden einzusetzen und daraus Fasern zu extrudieren, werden zwar beschrieben (EP1935894A1, US4649177, US5750603, US5952406), aber es sind bis heute noch keine entsprechenden Produkte auf dem Markt. Was u.a. daran liegt, dass speziell bei der Herstellung eines Copolyamids, d.h. beim Einkondensieren der Phosphorkomponente in die Polyamidkette, nicht die erforderlichen Molekulargewichte aufgebaut werden und das Copolyamid einer Nachkondensation unterworfen werden muss, um die notwendige Verarbeitungsfähigkeit der Schmelze im Hinblick auf eine Faserherstellung zu erreichen.

Auch der Einsatz phosphormodifizierter Präpolymere unter Zusatz von Harz-Härter-Systemen wird beansprucht. Diese Systeme erlauben, den notwendigen Massenanteil der Phosphorkomponente bezüglich der Flammschutzwirkung zu reduzieren, was den mechanischen Eigenschaften des Materials zugute kommt (DE102006060339A1, DE102005015605A1). Des Weiteren werden verschiedene cyclische Phosphinsäurederivate auf Basis von 9,10-Dihydro-9-oxa-10-phosphaphenanthren-10-oxid (DOPO) beschrieben, die neben einem Einsatz vorzugsweise in Duroplasten auch in thermoplastischen Polyestern und Polyamiden zur Faserherstellung verwendet werden sollen (DE2646218A1, EP1710264A2, EP1710264B1).

Schließlich ist noch auf den Stand der Technik nach der DE 197 11 523 A1 zu verweisen: Nach dieser Druckschrift soll gefunden worden sein, dass die Reaktionsschmelzen nach vollständiger Addition von DOPO (sh. oben) an ITS (Itaconsäure) direkt zu Schuppen oder Pellets verarbeitet werden können, die sich ihrerseits wieder direkt als copolykondensierbares Flammschutzmittel für Polyester- und Polyamidfasern in die Polymerketten der Fasern einkondensieren lassen. Hierbei sollen übliche Pelletier-Verfahren und -Vorrichtungen bzw. übliche Gieß- und Schuppenbidungsverfahren verwendet werden können. In der DE 197 11 523 A1 wird also nicht die Herstellung flammengeschützten Polyamids beschrieben, sondern lediglich die Herstellung des DOPO-Itaconsäure-Addukts (Ukanol RD), welches zum Flammfestmachen von Polyestern und Polyamidfasern verwendet werden kann. Die Bedeutung einer speziellen relativen Viskosität für den Flammschutzeffekt von Polyamidfasern wird nicht offenbart.

Ausgehend von dem vorstehend geschilderten Stand der Technik liegt der Erfindung die Aufgabe zugrunde, verbesserte flammfeste Polyamide, ein besonders geeignetes Verfahren zu deren Herstellung sowie vorteilhafte Verwendungen dieser flammfesten Polyamide vorzuschlagen.

Die Erfindung löst diese Aufgabe durch ein flammfestes Polyamid als Kondensationsprodukt von Dicarbonsäuren mit Diaminen und gegebenenfalls mit einem Gehalt an Additiven, das dadurch gekennzeichnet ist, dass das Polyamid FR in seiner Hauptkette neben den Polyamid-Struktureinheiten der Formel (I)

-NH-OC-Cₓ-CO-NH-C_{y}-NH-OC- (I),

phosphormodifizierte Struktureinheiten der Formel (II) 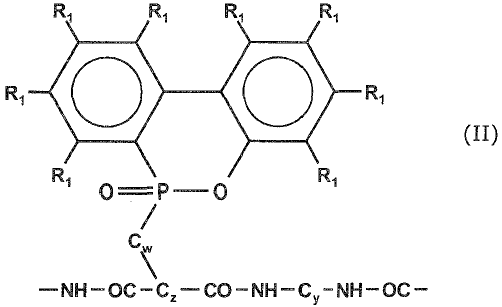 aufweist, worin bedeuten: C_{X}, C_{Y} und C_{W} jeweils, unabhängig voneinander, einen zweiwertigen organischen Rest, C_{Z} einen dreiwertigen organischen Rest, insbesondere einen Rest -ĆH(CH₂)ₙ-, wobei n eine ganze Zahl von 0 bis 5 darstellt, und die Reste R₁, unabhängig voneinander, Wasserstoff oder einen einwertigen organischen Rest, und eine relative Viskosität, gemessen als 1%-ige Lösung in 96%-iger Schwefelsäure bei 25°C, von mindestens 2,0 aufweist (gemessen nach DIN 51562).

Eine besonders vorteilhafte Ausgestaltung des erfindungsgemäßen flammfesten Polyamids FR zeichnet sich dadurch aus, dass der einwertige organische Rest R₁ eine C₁-C₆-Alkylgruppe, insbesondere eine C₁-C₃-Alkylgruppe, darstellt. Diese Ausgestaltung der Erfindung wird insbesondere durch eine Methyl-, Ethyl- und/oder eine 2-Propylgruppe darstellt.

Ferner erweist es sich bei der Verwirklichung der Erfindung als vorteilhaft, wenn der zweiwertige organische Rest C_{X}, C_{Y} und C_{W} der Formel (I) bzw. (II) eine lineare, cyclische oder verzweigte C₁-C₆-Alkylengruppe, insbesondere eine C₁-C₄-Alkylengruppe, eine Arylengruppe, insbesondere mit bis zu drei kondensierten oder nicht kondensierten Ringen, insbesondere in Form einer Phenylen-, Naphthylen- oder Phenanthrylen-Gruppe, bedeuten. Besonders bevorzugt ist es, wenn der zweiwertige organische Rest C_{w} der Formel (II) eine Methylengruppe bedeutet.

Der Rest C_{Z} in Form des dreiwertigen organischen Restes -ĆH(CH₂)ₙ- ist, wenn n eine ganze Zahl von 0 bis 3, insbesondere 1.

Es gilt als vorteilhaft, wenn das flammfeste Polyamid FR mindestens 0,01 Gew.-% und/oder höchstens 10 Gew.-%, insbesondere mindestens 0,01 und/oder höchstens 8 Gew.-% Phosphor enthält. Weitergehend vorteilhaft ist es, wenn das flammfeste Polyamid FR 0,01 bis 4 Gew.-% Phosphor enthält. Als vorteilhafte Rahmenbedingungen können auch folgende quantitative Angaben gemacht werden: 0,01 bis 1,5 Gew.-%, insbesondere 0,1 bis 0,5 Gew.-% Phosphor.

Die Menge an phosphormodifizierten Struktureinheiten der Formel (II) in dem erfindungsgemäßen flammfesten Polyamid FR ist nicht kritisch festlegbar. Man könnte als eine gewisse Regel angeben, dass unter Zugrundelegung einer erfindungsgemäß geeigneten gewichtsprozentualen Phosphormenge, wie oben dargestellt, die dort angesprochenen Rahmenbedingungen etwa das 10- bis 12-fache, insbesondere etwa das 12-fache, betragen. So könnte man es auch als bevorzugt bezeichnen, wenn das flammfeste Polyamid FR, bezogen auf sein Gesamtgewicht, 0,1 bis 10 Gew.-%, insbesondere 0,1 bis 8 Gew.-% phosphormodifizierte Struktureinheiten der Formel (II) enthält. Ganz besonders bevorzugt ist es, wenn das flammfeste Polyamid FR 0,5 bis 6 Gew.-% der phosphormodifizierten Struktureinheiten der Formel (II) enthält.

Darüber hinaus ist es vorteilhaft, wenn dem erfindungsgemäßen flammfesten Polyamid FR 0,01 bis 1,0 Gew.-%, insbesondere 0,3 bis 0,7 Gew.-% Additive einbezogen sind. Das heißt, in der Gesamtmasse aus flammfestem Polyamid und Additiven sind die Additive in diesem Mengenanteil enthalten.

Bei den Additiven handelt es sich insbesondere um eigenschaftsverbessernde Additive, insbesondere UV- und/oder Thermo-Stabilisatoren und/oder Mattierungsmittel. Bei der praktischen Verwirklichung der vorliegenden Erfindung hat es sich als vorteilhaft erwiesen, wenn das flammfeste Polyamid eine Nichtentflammbarkeit aufweist, die den Vorgaben der Vorschrift UL 94 V-0 entspricht.

Für die vielfältigen Weiterverarbeitungsmöglichkeiten des erfindungsgemäßen flammfesten Polyamids FR, gegebenenfalls mit einbezogenen Additiven, hat es sich als nützlich erwiesen, wie bereits vorstehend herausgestellt, dies insbesondere zur Weiterverarbeitung nach dem Schmelzspinnverfahren, dass das flammfeste Polyamid FR eine relative Viskosität, gemessen als 1%-ige Lösung in 96%-iger Schwefelsäure bei 25°C, von mindestens 2,0, insbesondere von mindestens 2,4 (gemessen nach DIN 51562) aufweist. Hierbei ist es besonders vorteilhaft, wenn das flammfest Polyamid FR eine relative Viskosität, gemessen in obiger Weise, von mindestens 2,4 und/oder höchstens 4 erreicht (gemessen nach DIN 51562), insbesondere zur Weiterverarbeitung nach dem Schmelzspinnverfahren.

Die oben bezeichnete relative Viskosität des erfindungsgemäßen flammfesten Polyamids FR ist eine Größe, die im Hinblick auf die Weiterverarbeitung von Bedeutung ist, insbesondere im Rahmen eines Extrusionsverfahrens, wie eines Blasform-, Spritzguss- oder Schmelzspinnverfahrens. Dabei stehen verschiedene, nachfolgend noch angesprochene Anwendungsfälle im Vordergrund, so insbesondere die Herstellung von Monofilament-, Multifilament- sowie Stapelfasergarnen. Hierzu könnten äquivalent, dies unter Angabe von Rahmenwerten, Molekulargewichte angegeben werden, innerhalb derer die Erfindung in praktischer Weise und mit Vorteil verwirklicht werden kann, wobei das Molekulargewicht, das sich aus der relativen Viskosität (sh. oben) ergibt, wenn diese über die Huggins-Gleichung unter Verwendung der Konstanten h_{H}=0,30 zur Grenzviskositätszahl und daraus über die Mark-Houwing-Staudinger-Gleichung unter Verwendung von K=0,115 (ml/g) und a=0,67 weiterentwickelt wird und in Form des Viskositätsmittelwertes des Molekulargewichts (Mv) vorliegt, vorzugsweise zwischen etwa 15000 g/mol und 65000 g/mol, insbesondere zwischen 20000 g/mol und 50000 g/mol, liegt. Somit würde sich eine geeignete Molekulargewichtsangabe auf die zunächst in einfacher Weise zu übermittelnde relative Viskosität beziehen. Die ermittelte relative Viskosität ist dem Fachmann aber ein besonders geeigneter Parameter, um die Erfindung in der wünschenswerten Weise unter Lösung der gestellten Aufgabe zu praktizieren.

Die Erfindung ist nicht auf spezielle Diamin- und Dicarbonsäuren als Grundmaterialien zur Herstellung des angestrebten flammfesten Polyamids beschränkt. Dennoch können folgende Kombinationen als besonders vorteilhaft angegeben werden: PA6.9 (Hexamethylendiamin/Acelainsäure), PA6.12 (Hexymethylendiamin/Dodecansäure), PA4.6 (Tetramethylendiamin/Adipinsäure), PA12.12 (Dodecandiamin/Dodecandisäure) oder PA6.6 (Hexamethylendiamin/Adipinsäure), jeweils in erfindungsgemäß modifizierter Form. Im Rahmen der Erfindung ist der Einsatz der Kombination Hexamethylendiamin mit Adipinsäure besonders vorteilhaft.

Eine besonders vorteilhafte Ausgestaltung des erfindungsgemäßen flammfesten Polyamids FR besteht darin, dass es als Gemisch mit nicht erfindungsgemäßen Polyamiden, insbesondere mit Polyamid 6 (Polycaprolactam), vorliegt, wobei der Anteil des flammfesten Polyamids, bezogen auf das Gemisch, mindestens 0,01 und/oder höchstens 10 Gew.-%, insbesondere mindestens 0,01 und/oder höchstens 8 Gew.-%, beträgt. Dabei ist es bevorzugt, wenn dieser gewichtsprozentuale Rahmen bei 0,05 bis 6 Gew.-%, insbesondere 0,01 bis 1,5 Gew.-% Phosphor, liegt.

Bevorzugt ist es, wenn das Gemisch aus flammfestem Polyamid FR und nicht erfindungsgemäßem Polyamid eine relative Viskosität, gemessen als 1%-ige Lösung in 96%-iger Schwefelsäure bei 25°C, von mindestens 2,0, insbesondere von mindestens 2,4 und/oder höchstens 4, erreicht (gemessen nach DIN 51562), insbesondere zur Weiterverarbeitung nach dem Schmelzspinnverfahren.

So kann erfindungsgemäß ein flammfestes bzw. nicht brennbares Polyamid dadurch erhalten werden, dass das flammfeste Polyamid FR in dem bezeichneten Gemisch aufgeschmolzen und insbesondere zu einem Multifilamentgarn extrudiert wird. Durch das Blenden mit beispielsweise einem Polyamid 6 (Polycaprolactam) wird der Phosphorgehalt im Multifilamentgarn weiter reduziert und kann so weit vermindert werden, bis die Grenze der Nicht-Brennbarkeit erreicht wird. Der bevorzugte Gehalt an Phosphor in einem derartigen Polymergemisch wurde vorstehend bereits bezeichnet. Es können jedoch auch folgende quantitative Rahmenbedingungen als vorteilhaft bezeichnet werden: 0,01 bis 1,5 Gew.-%, insbesondere 0,1 bis 0,5 Gew.-%.

Bei der Weiterverarbeitung des Gemisches, beispielsweise zu dem angesprochenen Multifilamentgarn, ist es besonders vorteilhaft, die oben bereits bezeichneten Viskositätsbedingungen in Betracht zu ziehen, wobei der Phosphorgehalt des Gemisches vorzugsweise mindestens 0,05 Gew.-% beträgt, insbesondere zur Weiterverarbeitung nach dem Schmelzspinnverfahren.

Ein besonders vorteilhaftes Verfahren zur Herstellung des erfindungsgemäßen flammfesten Polyamids FR kennzeichnet sich dadurch, dass im Verlaufe einer Polyamid-Synthese ein oder mehrere Diamine (H) mit einer oder mehreren Dicarbonsäuren (A)

H₂N-Cₓ-NH₂ (H)

HOOC-C_{y}-COOH (A)

wobei Cₓ und C_{y} die Bedeutung nach den vorhergehenden Ansprüchen haben, unter einem Druck von mindestens 15 bar, insbesondere einem Druck von 20 bar bis 30 bar, und bei erhöhter Temperatur, insbesondere bei einer Temperatur von weniger als 295°C, insbesondere von 230°C bis 280°C, in Gegenwart von Wasser zur Einstellung des vorbezeichneten Druckrahmens, mit einer oder mehreren Dicarbonsäuren der folgenden Formel (IV) 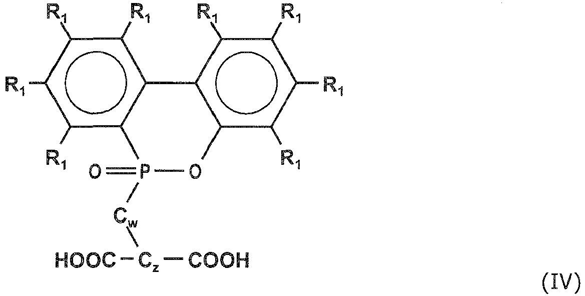 wobei C_{z}, C_{w}, und R₁ die in den nachfolgenden Ansprüchen dargestellte Bedeutung haben, polykondensiert werden, und wobei sich die Diamine (H) bei den jeweiligen Dicarbonsäuren (A) und bei den Dicarbonsäuren der Formel (IV) unterscheiden können, und 1. die phosphormodifizierten Dicarbonsäuren (IV) sowie die nicht phosphormodifizierten Dicarbonsäuren (A) jeweils in Form ihrer analogen AH-Salze mit den Diaminen (H) oder 2. die phosphormodifizierten Dicarbonsäuren (IV) oder die nicht phosphormodifizierten Dicarbonsäuren (A) zusammen mit den jeweiligen Diaminen (H), nicht in Form ihrer analogen AH-Salze, im stöchiometrischen Verhältnis von etwa 1:1 der Polykondensation unterworfen werden, wobei nach der Polykondensation eine Drucksenkung im Reaktionsraum auf weniger als 1 bar, insbesondere weniger als 100 mbar, durchgeführt wird.

Der oben dargestellte Einsatz des Wassers im Verlaufe des erfindungsgemäßen Verfahrens ist sehr zweckmäßig, um den vorstehend aufgezeichneten Druckrahmen einzustellen. Dabei ist es besonders vorteilhaft, wenn mindestens 8 Mol-% Wasser, insbesondere mindestens 10 Mol-% Wasser, bezogen auf die Gesamtmenge der Reaktionspartner der Polykondensation, zur Einstellung des Drucks von mindestens 15 bar, insbesondere von 20 bis 30 bar, insbesondere 20 bis 25 bar, eingesetzt werden. Besonders bevorzugt ist es, wenn 8 bis 15 Mol-% Wasser, bezogen auf die Gesamtmenge der Reaktionspartner der Polykondensation, eingesetzt werden.

Wie bereits oben dargestellt, ist die Drucksenkung im Reaktionsraum nach der angesprochenen Polykondensation von wesentlicher Bedeutung. Dabei ist es bevorzugt, wenn die Drucksenkung auf 1 bis 100 mbar, insbesondere 1 bis 50 mbar, durchgeführt wird. Ganz besonders ist es bevorzugt, wenn die Drucksenkung auf 1 bis 10 mbar erfolgt.

Des Weiteren wird das erfindungsgemäße Verfahren dadurch vorteilhaft ausgestaltet, dass die phosphormodifizierten Dicarbonsäuren (IV) in einer solchen Menge eingesetzt werden, dass der Phosphorgehalt des flammfesten Polyamids FR mindestens 0,01 und/oder höchstens 10 Gew.-%, insbesondere mindestens 0,01 und/oder höchstens 8 Gew.-%, insbesondere 0,01 bis 4 Gew.-%, beträgt. Schließlich wird das erfindungsgemäße Verfahren zweckmäßigerweise dadurch vorteilhaft gestaltet, indem der Phosphorgehalt des flammfesten Polyamids FR, als Verfahrenserzeugnis, die oben dargestellten quantitativen Rahmenbedingungen hierfür einhält. Dabei hat es sich als vorteilhaft erwiesen, dass als nicht phosphormodifizierte Dicarbonsäure Adipinsäure, Dodekansäure und/oder Dodecandisäure und als Diamin Hexamethylendiamin, Tetramethylendiamin und/oder Dodecandiamin eingesetzt werden.

Die Erfindung geht demzufolge von der Erkenntnis aus, dass zur Herstellung des erfindungsgemäßen flammfesten Polyamids FR die Einkondensierung der Dicarbonsäure (IV) in der Hauptkette des Polyamids herangezogen wird, insbesondere dies und beispielhaft im Zusammenhang mit der PA6.6-Synthese aus Adipinsäure und Hexamethylendiamin, wobei ein AH-Salz der phosphormodifizierten Dicarbonsäure (IV) entsprechend dem in der PA6.6-Synthese aus Adipinsäure und Hexamethylendiamin hergestellten AH-Salz bereitgestellt wird. Es wird demzufolge im Rahmen des erfindungsgemäßen Verfahrens ein intrinsisch nicht brennbares bzw. flammfestes Copolyamid hergestellt, bei dem die jeweilige Dicarbonsäure, insbesondere Adipinsäure, zum Teil durch eine Dicarbonsäure (IV) ersetzt wird. Diese wird dabei je nach eingesetztem Masseanteil statistisch in die Polyamidkette eingebaut, ohne dabei die Polymerisationsreaktion oder die physikalischen Eigenschaften des Polyamids wesentlich zu beeinflussen. Dabei ist es von Bedeutung, um eine Optimierung bei dem erfindungsgemäßen technischen Vorschlag zu erreichen, die beiden AH-Salze in einem geeigneten Mischungsverhältnis gemeinsam in einer für die PA6.6-Synthese üblicherweise benutzten Polymerisationsanlage zu polymerisieren, wobei eine für die spätere Faseranwendung übliche Viskosität aufgebaut wird. In diesem Zusammenhang sei auch auf die nachfolgende Tabelle 1 verwiesen, in der erfindungsgemäß in Frage kommende aliphatische Diamine und aliphatische Dicarbonsäuren mit dem jeweiligen Schmelzpunkt der zuzuordnenden Polyamide bezeichnet werden.

Die vorstehenden technologischen Ausführungen, wenngleich insbesondere auf die Adipinsäure und Hexamethylendiamin bezogen, gelten selbstverständlich generell für alle erfindungsgemäß in Betracht kommenden Paarungen. Grundsätzlich kann im Rahmen der Erfindung von Paarungen Dicarbonsäuren/Diamin sowie phosphormodifizierten Dicarbonsäuren (IV)/Diaminen gesprochen werden. Für den Fachmann ist es somit verständlich, dass man auch Gemische verschiedener Dicarbonsäuren und Diaminen heranziehen kann. Zu dem Begriff *"AH-Salze"* ist noch auszuführen: Wenn hier von AH-Salz(en) gesprochen wird, dann geht das zunächst auf das Reaktionsprodukt aus Hexamethylendiamin und Adipinsäure zurück. Dieses stellt ein Zwischenprodukt bei der Herstellung von Polyamid 6.6 dar. Im Sinne der Erfindung soll der Begriff *"AH-Salz"* abstrahiert verstanden werden. Das bedeutet, dass hier eine oder mehrere Dicarbonsäuren (A) und eine oder mehrere Diamine (H), erfindungsmodifiziert oder auch nicht modifiziert, in ein *"AH-Salz"* überführt werden können, um dann im Rahmen der Erfindung zum Einsatz zu gelangen.

Die bei dem erfindungsgemäßen Verfahren vollzogene Polykondensation folgt den standardgemäßen Regeln. Konkret könnte hierzu Folgendes ausgeführt werden:
Die Polykondensation erfolgt vorzugsweise unter Zusatz von Wasser unter den vorstehend bezeichneten bevorzugten Druckbedingungen sowie bei einer Temperatur, die den oben bezeichneten Rahmenbedingungen folgt, insbesondere bei etwa 220°C, innerhalb weniger Stunden, insbesondere von drei bis vier Stunden, insbesondere bei einem Druck von über 20 bar. Danach wird über ein Nadelventil entspannt und der Wasserdampf abgelassen, wobei innerhalb von 45 Minuten das Drehmoment am Rührer von 0,5 Nm auf 8 bis 9 Nm ansteigt. Die Polymerschmelze wird sodann abgelassen, granuliert, gewaschen und im Feinvakuum getrocknet. In dieser Form erfolgt die Verarbeitung nach einem Schmelzspinnprozess, wobei ein Multifilamentgarn erzeugt wird, welches selbst bei permanenter Einwirkung einer Flamme nicht zum Brennen gebracht werden kann.

Grundsätzlich gilt hier die allgemeine Regel, dass es von Vorteil ist, dass die Mengenverhältnisse der Reaktionspartner in Form der Diamine, Dicarbonsäuren und Dicarbonsäure (IV) unter Berücksichtigung der vorstehend dargestellten Gesichtspunkte eingesetzt werden. Bevorzugt ist es daher beispielsweise, dass die phosphormodifizierten Dicarbonsäuren (IV) in einer solchen Menge eingesetzt werden, dass der Phosphorgehalt des flammfesten Polyamids FR von den oben bezeichneten quantitativen Rahmenbedingungen erfasst wird.

Sachdienlich ist es, wenn man auch der Herstellung der beim erfindungsgemäßen Verfahren eingesetzten AH-Salze Aufmerksamkeit zuwendet. So ist es von Vorteil, wenn die AH-Salze der Dicarbonsäure der Formel (IV) allein oder in Abmischung mit einem AH-Salz der Dicarbonsäure, das nicht phosphormodifiziert ist, hergestellt und der Polykondensation zum flammfesten Polyamid FR unterworfen werden. Andererseits kann es vorteilhaft sein, wenn ein Teil des nicht phosphormodifizierten AH-Salzes, beruhend auf nicht phosphormodifizierten Dicarbonsäuren (A) und Diaminen (H), durch das phosphormodifizierte AH-Salz, beruhend auf phosphormodifizierten Dicarbonsäuren der Formel (IV) und dem jeweiligen Diamin (H), ersetzt und hiermit die Polykondensation durchgeführt wird. Obige Aussagen in ihrer allgemeinen Form lassen sich wie folgt durch konkrete Beschreibungen erläutern: So ist es bevorzugt, dass die Dicarbonsäure (IV) z.B. auf Bernsteinsäure basiert und in einer Konzentration eingesetzt wird, wobei deren Einsatzmenge im fertigen Copolyamid zu einem Phosphorgehalt führt, wie vorstehend bereits bezeichnet, insbesondere in der Größenordnung von etwa 1 Gew.-%. Dabei hat es sich als zweckmäßig erwiesen, dass bei der Copolyamid-Synthese die Dicarbonsäure (IV) als AH-Salze unter Verwendung des Diamins, insbesondere des 1,6-Diaminohexans, gemeinsam mit einem AH-Salz aus der Dicarbonsäure, insbesondere der Adipinsäure, sowie des Diamins, insbesondere des 1,6-Diaminohexans, eingesetzt wird. Dabei hat es sich zudem als vorteilhaft erwiesen, das erstere AH-Salz (der phosphormodifizierten Carbonsäure) im Vergleich zum letzteren AH-Salz (mit nicht phosphormodifizierter Dicarbonsäure) in einem Massenverhältnis von 10 bis 90 Gew.-%, bezogen auf die Gesamtmasse des flammfesten Polyamids FR, zu verwenden.

Die erfindungsgemäßen flammfesten Polyamide FR bzw. die nach dem beschriebenen Verfahren hergestellten Produkte zeigen vorteilhafte Eigenschaften, wenn sie zur Herstellung von Formkörpern, insbesondere von Folien, Bauteilen und Garnen, insbesondere Monofilament- bzw. Multifilamentgarnen sowie Stapelfasergarnen, insbesondere im Rahmen eines Extrusionsverfahrens, insbesondere eines Blasform-, Spritzguss- oder Schmelzspinnverfahrens herangezogen werden. Dies erfolgt zweckmäßigerweise im Rahmen eines Schmelzverfahrens, insbesondere mit einem Blasform- bzw. einem Spritzgussverfahren zur Herstellung von Folien bzw. Bauteilen sowie einem Filamentspinnverfahren zur Herstellung von Mono- und/oder Multifilament- sowie Stapelfasergarnen.

Bei der Herstellung der Filamentgarne ist es bevorzugt, dass die Filamentgarne in einer Schmelzspinn-Wickel-Anlage hergestellt werden und diese unter einer Spinndüse mit einer Geschwindigkeit von 500 bis 5000 m/min, insbesondere von 1500 bis 4500 m/min, abgezogen und auf Spulen aufgewickelt bzw. zu Stapeln geschnitten und zu Ballen gepresst werden, wobei das eingesetzte flammfeste Polyamid FR eine relative Viskosität aufweist, gemessen als 1%-ige Lösung in 96%-iger Schwefelsäure bei 25°C, von mindestens 2,0, insbesondere von mindestens 2,4, insbesondere von 2,4 bis 3,4 (gemessen nach DIN 51562), wobei als Höchstwert insbesondere 4 gilt. Dabei ist es besonders mit Vorteilen verbunden, wenn die Herstellung der Filamentgarne durch Variation des Polymerdurchsatzes im vorgeschalteten Extruder und der Aufwickelgeschwindigkeit so gesteuert wird, dass der Filamenttiter der erhaltenen Filamentgarne auf 0,5 bis 20 dtex eingestellt wird. Beachtenswert ist es darüber hinaus und führt zu Vorteilen, wenn die endgültige anwendungsbezogene Einstellung des Filamenttiters in einem üblichen Streck- oder Streck-Texturierschritt derartig erfolgt, dass der Filamenttiter im Hinblick auf die spätere Anwendung zur Herstellung von Teppichen 10 bis 20 dtex, zur Herstellung von Bekleidungsstücken 1 bis 5 dtex und zur Herstellung von Textilien auf Basis von Mikrofasern weniger als etwa 1 dtex beträgt. Es gilt als besonders bevorzugt, dass die hergestellten Filamente bzw. Filamentgarne sowie daraus gewonnene Stapelfasern zur Herstellung textiler Flächengebilde, insbesondere von Gestricken, Geweben, Vliesen und Gewirken, herangezogen werden können.

In Verbindung mit der Weiterverarbeitung des erfindungsgemäßen flammfesten Polyamids FR zu Filament- bzw. Stapelfasergarnen kann noch auf folgende vorteilhafte Weiterbildung verwiesen werden: So ist es vorteilhaft, wenn das erfindungsgemäße Verfahren, insbesondere zur Polymerverarbeitung im Extruder bei Temperaturen von nicht mehr als 285°C, so gesteuert werden, dass der Filamenttiter der hergestellten Filamentgarne auf 0,1 dtex bis 20 dtex eingestellt wird. Dabei erfolgt die Einstellung des Filamenttiters vorzugsweise derartig, dass bei der späteren Anwendung des Filamentgarns als technisches Garn oder als Garn für den Heimtextilbereich der Filamenttiter zwischen etwa 10 und 20 dtex, zur Anwendung im Bekleidungssektor zwischen etwa 1 und 5 dtex, bei Textilien auf Basis von Mikrofasern bei weniger als etwa 1 dtex, insbesondere unterhalb 0,8 dtex, liegt.

Die Durchführung des erfindungsgemäßen Verfahrens bzw. die Verwirklichung der Erfindung in Form des flammfesten Polyamids FR eröffnet eine neuartige Möglichkeit, intrinsisch flammfeste Polyamide FR, ausgehend von phosphormodifizierten gemischten AH-Salzen der bezeichneten Art herzustellen, ohne dass eine grundsätzliche Änderung bei der Durchführung der Polymersynthese bzw. der Polykondensation oder bei der Herstellung der extrudierten Produkte notwendig ist. Möglich wird dies dadurch, dass die notwendige Dotierung der hergestellten Polyamide mit einem wünschenswerten Phosphoranteil der oben bezeichneten Rahmenbedingungen, insbesondere unter 1 Gew.-%, die üblicherweise in der jeweiligen Anwendung zu erreichenden Eigenschaften der extrudierten Produkte nicht wesentlich beeinflusst.

Dies stellt eine bisher nicht bekannte Neuerung dar, bei der gegenüber der bisherigen Praxis, in der überwiegend salzartige und/oder niedermolekulare Phosphorverbindungen in vergleichsweise höheren Konzentrationen zugesetzt werden, homogene Polymersysteme mit niedrigeren Phosphorgehalten durch Einbau der Phosphorkomponente in die Polymerkette erzeugt werden.

Von besonderem Vorteil erweisen sich die erfindungsgemäßen flammfesten Polyamide in ihrer Verwendung zur Herstellung von Formkörpern, insbesondere von Folien, Bauteilen und Garnen, insbesondere Monofilament- bzw. Multifilamentgarnen sowie Stapelfasergarnen, insbesondere im Rahmen eines Extrusionsverfahrens. Eine besonders vorteilhafte Ausgestaltung dieser Verwendungslehre besteht darin, dass das Extrusionsverfahren als Blasform-, Spritzguss- oder Schmelzspinnverfahren durchgeführt wird. Von großem Vorteil ist es dabei, dass die hergestellten Monofilamente bzw. Monofilamentgarne sowie daraus gewonnene Stapelfasergarne zur Herstellung textiler Flächengebilde, insbesondere von Gestricken, Geweben, Vliesen und Gewirken, herangezogen werden.

Nachfolgend wird die Erfindung anhand von Beispielen noch näher erläutert, welche eine typische Prozesskette mit den einzelnen darin vorkommenden Prozessschritten von der Herstellung der Ausgangsverbindungen in der Synthese bis zum gefärbten Produkt darstellt. Diese Beispiele sollen nur erläuternden Charakter haben.

### Beispiel 1 (Herstellung des phosphormodifizierten AH-Salzes)

Das Umsetzungsprodukt aus DOPO (9,10-Dihydro-9-oxa-10-phosphaphenanthrene 10-Oxid (III)) und Itaconsäure - entsprechend Formel (IV) mit R'=Methylen und C_{X}=Ethylen - wird in der 10-20fachen molaren Menge Wasser und bei einer Temperatur von 40°C gelöst. Dann wird portionsweise eine ausreichende Menge einer AH-Salzlösung bestehend aus 1,6-Diaminohexan (HMDA) und Adipinsäure zugegeben, so dass die molaren Anteile von Itaconsäure zu Adipinsäure im Verhältnis 1 : 9 stehen.

### Beispiel 2 (Synthese des phosphormodifizierten Polyamids)

Ein bis 25 bar druckstabiler Stahlautoklav wird mit der modifizierten AH-Salz-Lösung nach Beispiel 1 befüllt und unter Stickstoff gesetzt. Dann wird der Reaktor verschlossen und dessen Inhalt innerhalb von drei Stunden auf 223°C erhitzt. Der Druck im Reaktor steigt dabei auf 20,5 bar. Dieser Druck und diese Temperatur werden für die Dauer von 3 Stunden aufrechterhalten. Danach wird innerhalb von 45 Minuten langsam auf Umgebungsdruck entspannt und gleichzeitig weiter auf 276°C erhitzt. Das bei der Reaktion freigewordene Wasser wird über einen aufsteigenden Kolonne und einen absteigenden nachgeschalteten Kühler aus dem Reaktionsprodukt abgetrennt entfernt. Zur vollständigen Entfernung des Wassers wird ein Unterdruck von weniger als 1 mbar angelegt. Ab diesem Zeitpunkt steigt das Drehmoment des Rührers im Reaktor signifikant nimmt gegen Ende der Entspannungsphase dabei sprunghaft zu und erreicht in Korrelation zur relativen Viskosität der Schmelze einen konstanten Wert, der den Zeitpunkt des Austrags des Polymers aus dem Reaktor signalisiert. Der Austrag erfolgt in Form eines Stranges, der direkt unter dem Auslassventil in einem Eisbad verfestigt und nach Abzug aus dem Eisbad direkt in einem Granulator zu einem Stranggranulat verarbeitet wird. Das so hergestellte Granulat wird anschließend mit Wasser ausgekocht und dann für die weitere Verarbeitung im Vakuum bei 100°C auf eine Restfeuchte von 250 ppm getrocknet. Der Phosphorgehalt im fertigen Polymer erreicht dabei einen Maximalwert von etwa 1 %, der Schmelzpunkt des Polymers beträgt 252°C, die in 96%-iger Schwefelsäure bei 25,00°C gemessene relative Viskosität der 1%-igen Polymerlösung beträgt 2,07 und die farbmetrischen Werte gemessen am Granulat werden zu L* = 63,61, a* = -2,86 und b* = +22,55 ermittelt.

### Beispiel 3 (Herstellung eines Gemisches aus phosphormodifiziertem Polyamid und kommerziellem PA6-Granulat)

Das zuvor hergestellte phosphormodifizierte Polyamid wird im Gewichtsverhältnis 1 : 9 mit einem kommerziellen PA6-Granulat gemischt und als solches Blend verarbeitet. Dazu wird eine Schmelzspinnanlage verwendet, die aus einem Ein-SchneckenExtruder, Schmelzspinnpumpe und Düsenpackung sowie einem Schnellwickler besteht, mit dem das hergestellte Filamentgarn bei einer Abzugsgeschwindigkeit von 4200 m/min auf Spulen aufgewickelt wird. Das Filamentgarn besteht aus 24 Einzelfilamenten und besitzt nach der anschließenden Verstreckung einen Titer von ca. 52 dtex. Die im Reißversuch ermittelten mechanischen Garndaten betragen 52,7 cN/tex für die Reißfestigkeit, 30% für die Reißdehnung und 218,7 cN/tex für den Anfangsmodul. Bei der Prüfung des Brennverhaltens der aus dem Filamentgarn hergestellten Gestricke ergibt sich im horizontalen Brenntest, dass das Gestrick auch mit einer mehrere Sekunden anstehenden Bunsenbrennerflamme nicht entzündet werden kann.

**Tabelle 1. Schmelztemperaturen von Polyamiden aus aliphatischen Diaminen und aliphatischen Dicarbonsäuren**

| Diamin | Dicarbonsäure | Polyamid | Schmelztemp. [°C] |
|---|---|---|---|
| Butandiamin-(1,4) | Adipinsäure | 4.6 | 278-295 |
| | Pimelinsäure | 4.7 | 233 |
| | Korksäure | 4.8 | 250 |
| | Azelainsäure | 4.9 | 223 |
| | Sebacinsäure | 4.10 | 239 |
| Pentandiamin-(1,5) | Glutarsäure | 5.5 | 198 |
| | Adipinsäure | 5.6 | 223 |
| | Pimelinsäure | 5.7 | 183 |
| | Korksäure | 5.8 | 202 |
| | Azelainsäure | 5.9 | 179 |
| | Sebacinsäure | 5.10 | 186-195 |
| Hexandiamin-(1,6) | Adipinsäure | 6.6 | 255-260 |
| | Pimelinsäure | 6.7 | 202-228 |
| | Korksäure | 6.8 | 220-232 |
| | Azelainsäure | 6.9 | 185-226 |
| | Sebacinsäure | 6.10 | 209-223 |
| Heptandiamin-(1,7) | Adipinsäure | 7.6 | 226-250 |
| | Pimelinsäure | 7.7 | 196-2214 |
| | Sebacinsäure | 7.10 | 187-208 |
| Octandiamin-(1,8) | Adipinsäure | 8.6 | 235-250 |
| | Korksäure | 8.8 | 205-225 |
| | Sebacinsäure | 8.10 | 197-210 |
| Nonandiamin-(1,9) | Adipinsäure | 9.6 | 205 |
| | Azelainsäure | 9.9 | 165 |
| | Sebacinsäure | 9.10 | 179 |
| Decandiamin-(1,10) | Adipinsäure | 10.6 | 230-236 |
| | Korksäure | 10.8 | 208-217 |
| | Sebacinsäure | 10.10 | 194-203 |

Durch die Kombination der bezeichneten aliphatischen Diaminen und Dicarbonsäuren ist eine Vielzahl von Polyamiden erhältlich, deren Schmelztemperaturen in einem für das Schmelzspinnverfahren günstigen Bereich von etwa 180 bis 280°C liegen.

## Patentansprüche

1. Flammfestes Polyamid als Kondensationsprodukt von Dicarbonsäuren mit Diaminen und gegebenenfalls mit einem Gehalt an Additiven, **dadurch gekennzeichnet, dass** das flammfeste Polyamid FR in seiner Hauptkette neben den Polyamid-Struktureinheiten der Formel (I)
-NH-OC-Cₓ-CO-NH-C_{y}-NH-OC- (I)
phosphormodifizierte Struktureinheiten der Formel (II) 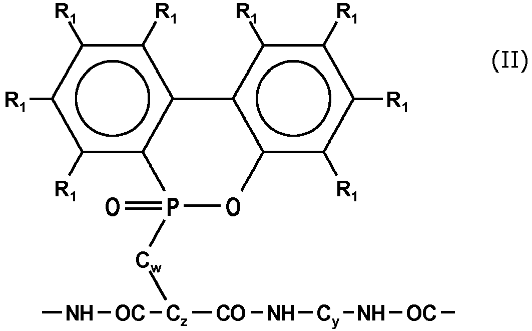 aufweist, worin bedeuten:
C_{X}, C_{Y} und C_{W} jeweils, unabhängig voneinander, einen zweiwertigen organischen Rest, C_{Z} einen dreiwertigen organischen Rest, insbesondere einen Rest -ĆH(CH₂)ₙ-, wobei n eine ganze Zahl von 0 bis 5 darstellt, und
die Reste R₁, unabhängig voneinander, Wasserstoff oder einen einwertigen organischen Rest, und
eine relative Viskosität, gemessen als 1%-ige Lösung in 96%-iger Schwefelsäure bei 25°C, von mindestens 2,0 aufweist (gemessen nach DIN 51562).

2. Flammfestes Polyamid nach Anspruch 1, **dadurch gekennzeichnet, dass** der einwertige organische Rest R₁ eine C₁-C₆-Alkylgruppe, insbesondere eine C₁-C₃-Alkylgruppe, darstellt.

3. Flammfestes Polyamid nach Anspruch 2, **dadurch gekennzeichnet, dass** die C₁-C₃-Alkylgruppe eine Methyl-, Ethyl- und/oder 2-Propylgruppe darstellt.

4. Flammfestes Polyamid nach Anspruch 1 oder 2, **dadurch gekennzeichnet, dass** der zweiwertige organische Rest C_{X}, C_{Y} und C_{W} der Formel (I) bzw. (II) eine lineare, cyclische oder verzweigte C₁-C₆-Alkylengruppe, insbesondere eine C₁-C₄-Alkylengruppe, eine Arylengruppe, insbesondere mit bis zu drei kondensierten oder nicht kondensierten Ringen, insbesondere in Form einer Phenylen-, Naphthylen- oder Phenanthrylen-Gruppe, bedeuten.

5. Flammfestes Polyamid nach mindestens einem der vorhergehenden Ansprüche, **dadurch gekennzeichnet, dass** in der Gruppe -CH(CH₂)ₙ- des organischen Restes C_{z} n eine ganze Zahl von 0 bis 3 darstellt.

6. Flammfestes Polyamid nach mindestens einem der Ansprüche 1 bis 5, **dadurch gekennzeichnet, dass** der zweiwertige organische Rest C_{w} der Formel (II) eine Methylengruppe bedeutet.

7. Flammfestes Polyamid nach mindestens einem der Ansprüche 1 bis 6, **dadurch gekennzeichnet, dass** das flammfeste Polyamid FR mindestens 0,01 Gew.-% und/oder höchstens 10 Gew.-%, insbesondere mindestens 0,01 und/oder höchstens 8 Gew.-% Phosphor enthält.

8. Flammfestes Polyamid nach Anspruch 7, **dadurch gekennzeichnet, dass** das flammfeste Polyamid FR 0,01 bis 4 Gew.-% Phosphor enthält.

9. Flammfestes Polyamid nach mindestens einem der vorhergehenden Ansprüche, **dadurch gekennzeichnet, dass** das flammfeste Polyamid FR eigenschaftsverbessernde Additive, insbesondere UV- und/oder Thermo-Stabilisatoren und/oder Mattierungsmittel, enthält.

10. Flammfestes Polyamid nach Anspruch 9, **dadurch gekennzeichnet, dass** es 0,01 bis 1,0 Gew.-%, insbesondere 0,3 bis 0,7 Gew.-% Additive enthält.

11. Flammfestes Polyamid nach mindestens einem der vorhergehenden Ansprüche, **dadurch gekennzeichnet, dass** es eine Nichtentflammbarkeit aufweist, die den Vorgaben der Vorschrift UL 94 V-0 entspricht.

12. Flammfestes Polyamid nach mindestens einem der vorhergehenden Ansprüche, **dadurch gekennzeichnet, dass** das flammfeste Polyamid FR eine relative Viskosität, gemessen als 1%-ige Lösung in 96%-iger Schwefelsäure bei 25°C, von mindestens 2,4 und/oder höchstens 4 erreicht (gemessen nach DIN 51562), insbesondere zur Weiterverarbeitung nach dem Schmelzspinnverfahren.

13. Flammfestes Polyamid nach mindestens einem der vorhergehenden Ansprüche, **dadurch gekennzeichnet, dass** es beruht auf
PA6.9 (Hexamethylendiamin/Acelainsäure),
PA6.12 (Hexylmethylendiamin/Dodecansäure),
PA4.6 (Tetramethylendiamin/Adipinsäure),
PA12.12 (Dodecandiamin/Dodecandisäure) oder
PA6.6 (Hexamethylendiamin/Adipinsäure),
jeweils in erfindungsgemäß modifizierter Form.

14. Flammfestes Polyamid nach mindestens einem der vorhergehenden Ansprüche, **dadurch gekennzeichnet, dass** das flammfeste Polyamid FR als Gemisch mit nicht erfindungsgemäßen Polyamiden, insbesondere mit Polyamid 6 (Polycaprolactam), vorliegt, wobei der Anteil des flammfesten Polyamids FR, bezogen auf das Gemisch, mindestens 0,01 und/oder höchstens 10 Gew.-%, insbesondere mindestens 0,01 und/oder höchstens 8 Gew.-%, beträgt.

15. Flammfestes Polyamid nach Anspruch 14, **dadurch gekennzeichnet, dass** es 0,05 bis 6 Gew.-%, insbesondere 0,1 bis 1,5 Gew.-% Phosphor enthält.

16. Flammfestes Polyamid nach Anspruch 14 oder 15, **dadurch gekennzeichnet, dass** das Gemisch aus flammfestem Polyamid FR und nicht erfindungsgemäßem Polyamid eine relative Viskosität, gemessen als 1%-ige Lösung in 96%-iger Schwefelsäure bei 25°C, von mindestens 2,0, insbesondere von mindestens 2,4 und/oder höchstens 4, erreicht (gemessen nach DIN 51562), insbesondere zur Weiterverarbeitung nach dem Schmelzspinnverfahren.

17. Verfahren zur Herstellung des flammfesten Polyamids nach mindestens einem der Ansprüche 1 bis 16, **dadurch gekennzeichnet, dass** im Verlaufe einer Polyamid-Synthese ein oder mehrere Diamine (H) mit einer oder mehreren Dicarbonsäuren (A)
H₂N-Cₓ-NH₂ (H)
HOOC-C_{y}-COOH (A)
wobei Cₓ und C_{y} die Bedeutung nach den vorhergehenden Ansprüchen haben, unter einem Druck von mindestens 15 bar, insbesondere einem Druck von 20 bar bis 30 bar, und bei erhöhter Temperatur, insbesondere bei einer Temperatur von weniger als 295°C, insbesondere von 230°C bis 280°C, in Gegenwart von Wasser zur Einstellung des vorbezeichneten Druckrahmens, mit einer oder mehreren Dicarbonsäuren der folgenden Formel (IV) 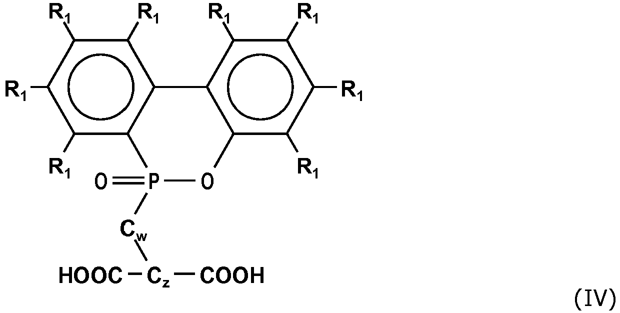
wobei C_{z}, C_{w}, und R₁ die in den vorstehenden Ansprüchen dargestellte Bedeutung haben, polykondensiert werden, und wobei sich die Diamine (H) bei den jeweiligen Dicarbonsäuren (A) und bei den Dicarbonsäuren der Formel (IV) unterscheiden können, und
1. die phosphormodifizierten Dicarbonsäuren (IV) sowie die nicht phosphormodifizierten Dicarbonsäuren (A) jeweils in Form ihrer analogen AH-Salze mit den Diaminen (H) oder
2. die phosphormodifizierten Dicarbonsäuren (IV) oder die nicht phosphormodifizierten Dicarbonsäuren (A) zusammen mit den jeweiligen Diaminen (H), nicht in Form ihrer analogen AH-Salze, im stöchiometrischen Verhältnis von etwa 1:1 der Polykondensation unterworfen werden,
wobei nach der Polykondensation eine Drucksenkung im Reaktionsraum auf weniger als 1 bar, insbesondere weniger als 100 mbar, durchgeführt wird.

18. Verfahren nach Anspruch 17, **dadurch gekennzeichnet, dass** die Drucksenkung auf 1 bis 100 mbar, insbesondere 1 bis 50 mbar, durchgeführt wird.

19. Verfahren nach Anspruch 18, **dadurch gekennzeichnet, dass** die Drucksenkung auf 1 bis 10 mbar durchgeführt wird.

20. Verfahren nach mindestens einem der Ansprüche 17 bis 19, **dadurch gekennzeichnet, dass** mindestens 8 Mol-% Wasser, insbesondere mindestens 10 Mol-% Wasser, bezogen auf die Gesamtmenge der Reaktionspartner der Polykondensation, zur Einstellung des Drucks von mindestens 15 bar, insbesondere von 20 bis 30 bar, eingesetzt werden.

21. Verfahren nach Anspruch 20, **dadurch gekennzeichnet, dass** 8 bis 15 Mol-% Wasser, bezogen auf die Gesamtmenge der Reaktionspartner der Polykondensation, eingesetzt werden.

22. Verfahren nach mindestens einem der Ansprüche 17 bis 21, **dadurch gekennzeichnet, dass** die phosphormodifizierten Dicarbonsäuren (IV) in einer solchen Menge eingesetzt werden, dass der Phosphorgehalt des flammfesten Polyamids FR mindestens 0,01 und/oder höchstens 10 Gew.-%, insbesondere mindestens 0,01 und/oder höchstens 8 Gew.-%, beträgt.

23. Verfahren nach Anspruch 22, **dadurch gekennzeichnet, dass** der Phosphorgehalt des flammfesten Polyamids FR 0,01 bis 4 Gew.-% beträgt.

24. Verfahren nach mindestens einem der Ansprüche 17 bis 23, **dadurch gekennzeichnet, dass** als nicht phosphormodifizierte Dicarbonsäure Adipinsäure, Dodecansäure und/oder Dodecandisäure und als Diamin Hexamethylendiamin, Tetramethylendiamin und/oder Dodecandiamin eingesetzt werden.

25. Verwendung des flammfesten Polyamids nach mindestens einem der Ansprüche 1 bis 16 zur Herstellung von Formkörpern, insbesondere von Folien, Bauteilen und Garnen, insbesondere Monofilament- bzw. Multifilamentgarnen sowie Stapelfasergarnen, insbesondere im Rahmen eines Extrusionsverfahrens.

26. Verwendung des flammfesten Polyamids nach Anspruch 25, wonach das Extrusionsverfahren als Blasform-, Spritzguss- oder Schmelzspinnverfahren durchgeführt wird.

27. Verwendung nach Anspruch 25 oder 26, **dadurch gekennzeichnet, dass** die hergestellten Monofilamente bzw. Monofilamentgarne sowie daraus gewonnene Stapelfasergarne zur Herstellung textiler Flächengebilde, insbesondere von Gestricken, Geweben, Vliesen und Gewirken, herangezogen werden.

## Claims

1. A flame-retardant polyamide as condensation product of dicarboxylic acids with diamines and optionally with a content of additives, **characterized in that** the flame-retardant polyamide FR contains in its main chain not only the polyamide structural units of the formula (I)
-NH-OC-Cₓ-CO-NH-C_{y}-NH-OC- (I)
but also phosphorus-modified structural units of the formula (II) 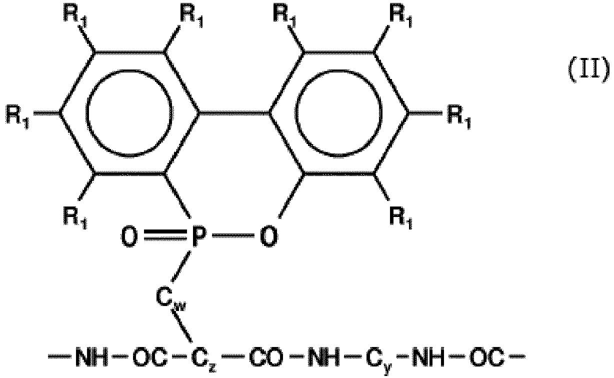 in which:
C_{X}, C_{Y} and C_{W}, each independently of one another, are a divalent organic radical,
Cz is a trivalent organic radical, more particularly a radical 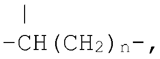 n being an integer from 0 to 5, and
the radicals R₁, independently of one another, are hydrogen or a monovalent organic radical, and
has a relative viscosity, measured as a 1% strength solution in 96% strength sulphuric acid at 25°C, of at least 2.0 (measured according to DIN 51562).

2. A flame-retardant polyamide according to claim 1, **characterized in that** the monovalent organic radical R₁ is a C₁-C₆ alkyl group, more particularly a C₁-C₃ alkyl group.

3. A flame-retardant polyamide according to claim 2, **characterized in that** the C₁-C₃ alkyl group is a methyl, ethyl and/or 2-propyl group.

4. A flame-retardant polyamide according to claim 1 or 2, **characterized in that** the divalent organic radical C_{X}, C_{y}, and C_{W} of the formula (I) and (II), respectively, is a linear, cyclic, or branched C₁-C₆ alkylene group, more particularly a C₁-C₄ alkylene group, or an arylene group, particularly having up to three fused or unfused rings, more particularly in the form of a phenylene, naphthylene or phenanthrylene group.

5. A flame-retardant polyamide according to at least one of the preceding claims, **characterized in that** in the group 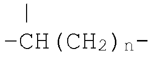 of the organic radical C_{z} n is an integer from 0 to 3.

6. A flame-retardant polyamide according to at least one of claims 1 to 5, **characterized in that** the divalent organic radical C_{w} of the formula (II) is a methylene group.

7. A flame-retardant polyamide according to at least one of claims 1 to 6, **characterized in that** the flame-retardant polyamide FR contains at least 0.01 wt% and/or not more than 10 wt%, more particularly at least 0.01 and/or not more than 8 wt%, of phosphorus.

8. A flame-retardant polyamide according to claim 7, **characterized in that** the flame-retardant polyamide FR contains 0.01 to 4 wt% of phosphorus.

9. A flame-retardant polyamide according to at least one of the preceding claims, **characterized in that** the flame-retardant polyamide FR contains property-improving additives, more particularly UV stabilizers and/or heat stabilizers and/or matting agents.

10. A flame-retardant polyamide according to claim 9, **characterized in that** it contains 0.01 to 1.0 wt%, more particularly 0.3 to 0.7 wt%, of additives.

11. A flame-retardant polyamide according to at least one of the preceding claims, **characterized in that** it has a nonflammability which meets the mandates of the UL 94 V-0 protocol.

12. A flame-retardant polyamide according to at least one of the preceding claims, **characterized in that** the flame-retardant polyamide FR attains a relative viscosity, measured as a 1% strength solution in 96% strength sulphuric acid at 25°C, of at least 2.4 and/or not more than 4 (measured according to DIN 51562), more particularly for further processing by the melt-spinning process.

13. A flame-retardant polyamide according to at least one of the preceding claims, **characterized in that** it is based on
PA6.9 (hexamethylenediamine/azelaic acid),
PA6.12 (hexamethylenediamine/dodecanoic acid),
PA4.6 (tetramethylenediamine/adipic acid),
PA12.12 (dodecanediamine/dodecanedioic acid) or
PA6.6 (hexamethylenediamine/adipic acid),
in each case in a form modified in accordance with the invention.

14. A flame-retardant polyamide according to at least one of the preceding claims, **characterized in that** the flame-retardant polyamide FR is present as a mixture with polyamides not of the invention, more particularly with polyamide 6 (polycaprolactam), the fraction of the flame-retardant polyamide FR, based on the mixture, being at least 0.01 and/or not more than 10 wt%, more particularly at least 0.01 and/or not more than 8 wt%.

15. A flame-retardant polyamide according to claim 14, **characterized in that** it contains 0.05 to 6 wt%, more particularly 0.1 to 1.5 wt%, of phosphorus.

16. A flame-retardant polyamide according to claim 14 or 15, **characterized in that** the mixture of flame-retardant polyamide FR and polyamide not of the invention attains a relative viscosity, measured as a 1% strength solution in 96% strength sulphuric acid at 25°C, of at least 2.0, more particularly of at least 2.4 and/or not more than 4 (measured according to DIN 51562), more particularly for further processing by the melt-spinning process.

17. A process for producing the flame-retardant polyamide according to at least one of claims 1 to 16, **characterized in that** in a polyamide synthesis one or more diamines (H) are subjected to polycondensation with one or more dicarboxylic acids (A)
**H₂N-Cₓ-NH₂** **(H)**
**HOOC-C_{y}-COOH** **(A)**
where Cₓ and C_{y} have the definition according to the preceding claims, under a pressure of at least 15 bar, more particularly a pressure from 20 bar to 30 bar, and at elevated temperature, more particularly at a temperature of less than 295°C, more particularly from 230°C to 280°C, in the presence of water to bring about the above pressure conditions with one or more dicarboxylic acids of the formula (IV) below 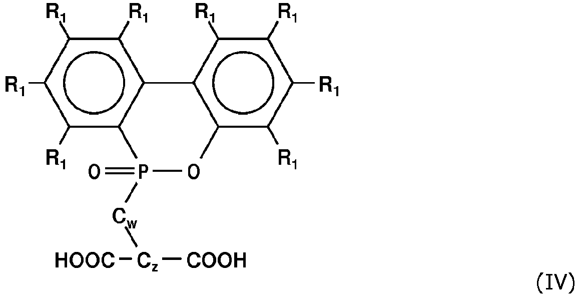
where C_{z}, C_{w}, and R₁ have the definition represented in the preceding claims, it being possible for the diamines (H) in the case of the respective dicarboxylic acids (A) and of the dicarboxylic acids of the formula (IV) to be different, and
1. the phosphorus-modified dicarboxylic acids (IV) and also the non-phosphorus-modified dicarboxylic acids (A), in each case in the form of their analogous AH salts with the diamines (H), or
2. the phosphorus-modified dicarboxylic acids (IV) or the non-phosphorus-modified dicarboxylic acids (A) together with the respective diamines (H), not in the form of their analogous AH salts, being subjected to polycondensation in a stoichiometric ratio of approximately 1:1,
the pressure in the reaction space after the polycondensation being lowered to less than 1 bar, more particularly less than 100 mbar.

18. A process according to claim 17, **characterized in that** the pressure is lowered to 1 to 100 mbar, more particularly 1 to 50 mbar.

19. A process according to claim 18, **characterized in that** the pressure is lowered to 1 to 10 mbar.

20. A process according to at least one of claims 17 to 19, **characterized in that** at least 8 mol% of water, more particularly at least 10 mol% of water, based on the total amount of the polycondensation reaction partners, are used for setting the pressure of at least 15 bar, more particularly from 20 to 30 bar.

21. A process according to claim 20, **characterized in that** 8 to 15 mol% of water, based on the total amount of the polycondensation reaction partners, are used.

22. A process according to at least one of claims 17 to 21, **characterized in that** the phosphorus-modified dicarboxylic acids (IV) are used in an amount such that the phosphorus content of the flame-retardant polyamide FR is at least 0.01 and/or not more than 10 wt%, more particularly at least 0.01 and/or no more than 8 wt%.

23. A process according to claim 22, **characterized in that** the phosphorus content of the flame-retardant polyamide FR is 0.01 to 4 wt%.

24. A process according to at least one of claims 17 to 23, **characterized in that** adipic acid, dodecanoic acid and/or dodecanedioic acid are used as non-phosphorus-modified dicarboxylic acid, and hexamethylenediamine, tetramethylenediamine and/or dodecanediamine are used as diamine.

25. The use of the flame-retardant polyamide according to at least one of claims 1 to 16 for producing shaped articles, more particularly films, components, and yarns, more particularly monofilament yarns, multifilament yarns and staple fibre yarns, more particularly in an extrusion process.

26. The use of the flame-retardant polyamide according to claim 25, whereby the extrusion process is carried out as a blow-moulding, injection-moulding or melt-spinning process.

27. The use according to claim 25 or 26, **characterized in that** the monofilaments and/or monofilament yarns produced and also staple fibre yarns obtained from them are employed for producing textile fabrics, more particularly crocheted fabrics, woven fabrics, non-woven fabrics and knitted fabrics.

## Revendications

1. Polyamide ignifugé sous forme de produit de condensation d'acides dicarboxyliques avec des diamines et ayant le cas échéant une teneur en additifs, le polyamide ignifugé FR étant **caractérisé en ce qu'**il comporte dans sa chaîne principale, en plus des motifs structurels de polyamide de formule (I)
-NH-OC-Cₓ-CO-NH-C_{y}-NH-OC- (I)
des motifs structurels modifiés par un groupe phosphore de formule (II) 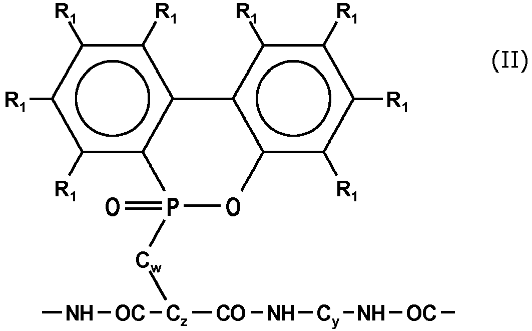 où :
C_{X}, C_{Y} et C_{W} représentent respectivement, indépendamment les uns des autres, un radical organique divalent,
Cz représente un radical organique trivalent, en particulier un radical -CH(CH₂)ₙ-, où n représente un nombre entier de 0 à 5, et
les radicaux R₁, indépendamment les uns des autres, représentent l'hydrogène ou un radical organique monovalent, et
présente une viscosité relative, mesurée sous forme de solution à 1 % dans de l'acide sulfurique à 96 % à 25°C, d'au moins 2,0 (mesurée d'après la norme DIN 51562).

2. Polyamide ignifugé selon la revendication 1, **caractérisé en ce que** le radical organique monovalent R₁ représente un groupe alkyle en C₁-C₆, en particulier un groupe alkyle en C₁-C₃.

3. Polyamide ignifugé selon la revendication 2, **caractérisé en ce que** le groupe alkyle en C₁-C₃ représente un groupe méthyle, éthyle et/ou 2-propyle.

4. Polyamide ignifugé selon la revendication 1 ou 2, **caractérisé en ce que** les radicaux organiques divalents C_{X}, C_{Y} et C_{W} de formule (I) et/ou (II) représentent un groupe alkylène en C₁-C₆ linéaire, cyclique ou ramifié, en particulier un groupe alkylène en C₁-C₄, un groupe arylène, en particulier ayant jusqu'à trois cycles condensés ou non condensés, en particulier sous la forme d'un groupe phénylène, naphtylène ou phénanthrylène.

5. Polyamide ignifugé selon au moins l'une des revendications précédentes, **caractérisé en ce que**, dans le groupe -CH(CH₂)ₙ- du radical organique C_{Z}, n représente un nombre entier de 0 à 3.

6. Polyamide ignifugé selon au moins l'une des revendications 1 à 5, **caractérisé en ce que** le radical organique divalent C_{W} de formule (II) représente un groupe méthylène.

7. Polyamide ignifugé selon au moins l'une des revendications 1 à 6, le polyamide ignifugé FR étant **caractérisé en ce qu'**il comprend au moins 0,01 % en poids et/ou au plus 10 % en poids, en particulier au moins 0,01 et/ou au plus 8 % en poids de phosphore.

8. Polyamide ignifugé selon la revendication 7, le polyamide ignifugé FR étant **caractérisé en ce qu'**il comprend 0,01 à 4 % en poids de phosphore.

9. Polyamide ignifugé selon au moins l'une des revendications précédentes, le polyamide ignifugé FR étant **caractérisé en ce qu'**il comprend des additifs améliorant les propriétés, en particulier des stabilisateurs d'UV et/ou des thermostabilisateurs et/ou des agents matifiants.

10. Polyamide ignifugé selon la revendication 9, **caractérisé en ce qu'**il comprend 0,01 à 1,0 % en poids, en particulier 0,3 à 0,7 % en poids d'additifs.

11. Polyamide ignifugé selon au moins l'une des revendications précédentes, **caractérisé en ce qu'**il présente une non inflammabilité qui correspond aux prescriptions de la norme UL 94 V-0.

12. Polyamide ignifugé selon au moins l'une des revendications précédentes, le polyamide ignifugé FR étant **caractérisé en ce qu'**il présente une viscosité relative, mesurée sous forme de solution à 1 % dans de l'acide sulfurique à 96 % à 25°C, d'au moins 2,4 et/ou d'au plus 4 (mesurée d'après la norme DIN 51562), en particulier pour une transformation ultérieure d'après le procédé de filage à chaud.

13. Polyamide ignifugé selon au moins l'une des revendications précédentes, **caractérisé en ce qu'**il est à base de
PA6.9 (hexaméthylènediamine/acide azélaïque),
PA6.12 (hexylméthylènediamine/acide dodécanoïque),
PA4.6 (tétraméthylènediamine/acide adipique),
PA12.12 (dodécanediamine/diacide dodécanoïque) ou
PA6.6 (hexaméthylènediamine/acide adipique),
respectivement sous une forme modifiée selon l'invention.

14. Polyamide ignifugé selon au moins l'une des revendications précédentes, le polyamide ignifugé FR étant **caractérisé en ce qu'**il se présente sous forme de mélange avec des polyamides non conformes à l'invention, en particulier avec du polyamide 6 (polycaprolactame), où la proportion de polyamide ignifugé FR, par rapport au mélange, atteint au moins 0,01 et/ou au plus 10 % en poids, en particulier au moins 0,01 et/ou au plus 8 % en poids.

15. Polyamide ignifugé selon la revendication 14, **caractérisé en ce qu'**il comprend 0,05 à 6 % en poids, en particulier 0,1 à 1,5 % en poids de phosphore.

16. Polyamide ignifugé selon la revendication 14 ou 15, **caractérisé en ce que** le mélange de polyamide ignifugé FR et de polyamide non conforme à l'invention présente une viscosité relative, mesurée sous forme de solution à 1 % dans de l'acide sulfurique à 96 % à 25°C, d'au moins 2,0, en particulier d'au moins 2,4 et/ou d'au plus 4 (mesurée d'après la norme DIN 51562), en particulier pour une transformation ultérieure d'après le procédé de filage à chaud.

17. Procédé de production du polyamide ignifugé selon au moins l'une des revendications 1 à 16, **caractérisé en ce que**, au cours d'une synthèse de polyamide, une ou plusieurs diamines (H) sont polycondensées avec un ou plusieurs acides dicarboxyliques (A)
H₂N-Cₓ-NH₂ (H)
HOOC-C_{y}-COOH (A)
dans lesquels C_{X} et C_{Y} ont la signification selon les revendications précédentes, sous une pression d'au moins 15 bar, en particulier sous une pression de 20 bar à 30 bar, et à température élevée, en particulier à une température inférieure à 295°C, en particulier de 230°C à 280°C, en présence d'eau pour l'ajustement du cadre de pression décrit précédemment, avec un ou plusieurs acides dicarboxyliques de la formule suivante (IV) 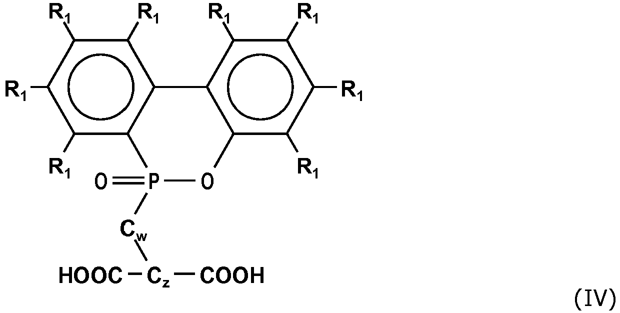
dans laquelle C_{Z}, C_{W}, et R₁ ont la signification présentée dans les revendications précédentes, et dans laquelle les diamines (H) dans les acides dicarboxyliques respectifs (A) et dans les acides dicarboxyliques de formule (IV) peuvent être différentes, et
1. les acides dicarboxyliques modifiés par un groupe phosphore (IV) et les acides dicarboxyliques non modifiés par un groupe phosphore (A), respectivement sous la forme de leurs sels AH analogues, avec les diamines (H) ou
2. les acides dicarboxyliques modifiés par un groupe phosphore (IV) et les acides dicarboxyliques non modifiés par un groupe phosphore (A) conjointement avec les diamines respectives (H), pas sous la forme de leurs sels AH analogues, sont soumis à la polycondensation en le rapport stoechiométrique d'environ 1/1,
une baisse de pression dans la chambre de réaction jusqu'à moins de 1 bar, en particulier jusqu'à moins de 100 mbar, étant réalisée après la polycondensation.

18. Procédé selon la revendication 17, **caractérisé en ce que** la baisse de pression jusqu'à 1 à 100 mbar, en particulier 1 à 50 mbar, est réalisée.

19. Procédé selon la revendication 18, **caractérisée en ce que** la baisse de pression jusqu'à 1 à 10 mbar est réalisée.

20. Procédé selon au moins l'une des revendications 17 à 19, **caractérisé en ce qu'**au moins 8 % en mol d'eau, en particulier au moins 10 % en mol d'eau, par rapport à la quantité totale des partenaires de réaction de la polycondensation, sont mis en oeuvre pour un ajustement de la pression d'au moins 15 bar, en particulier de 20 à 30 bar.

21. Procédé selon la revendication 20, **caractérisé en ce que** 8 à 15 % en mol d'eau, par rapport à la quantité totale des partenaires de réaction de la polycondensation, sont mis en oeuvre.

22. Procédé selon au moins l'une des revendications 17 à 21, **caractérisé en ce que** les acides dicarboxyliques modifiés par un groupe phosphore (IV) sont mis en oeuvre en une telle quantité que la teneur en phosphore du polyamide ignifugé FR est d'au moins 0,01 et/ou d'au plus 10 % en poids, en particulier d'au moins 0,01 et/ou d'au plus 8 % en poids.

23. Procédé selon la revendication 22, **caractérisé en ce que** la teneur en phosphore du polyamide ignifugé FR est de 0,01 à 4 % en poids.

24. Procédé selon au moins l'une des revendications 17 à 23, **caractérisé en ce que** l'on met en oeuvre de l'acide adipique, de l'acide dodécanoïque et/ou du diacide dodécanoïque comme acide dicarboxylique non modifié par un groupe phosphore et de l'hexaméthylènediamine, de la tétraméthylènediamine et/ou de la dodécanediamine comme diamine.

25. Utilisation du polyamide ignifugé selon au moins l'une des revendications 1 à 16 pour la production de corps moulés, en particulier de films, de composants et de fils, en particulier de fils monofilamentaires et/ou multi-filamentaires ainsi que de fils de fibres empilées, en particulier dans le cadre d'un procédé d'extrusion.

26. Utilisation du polyamide ignifugé selon la revendication 25, d'après laquelle le procédé d'extrusion est réalisé sous la forme d'un procédé de moulage par soufflage, de moulage par injection ou de filage à chaud.

27. Utilisation selon la revendication 25 ou 26, **caractérisée en ce que** les monofilaments et/ou fils monofilamentaires produits ainsi que les fils de fibres empilées obtenus à partir de ceux-ci sont utilisés pour la production de structures textiles plates, en particulier de tricots, de tissus, de voiles et d'aiguilletés.
